Europäisches Patentamt

European Patent Office

Office européen des brevets

(19)

(11) Veröffentlichungsnummer: **0 205 647**
**B1**

(12)

# EUROPÄISCHE PATENTSCHRIFT

(45) Veröffentlichungstag der Patentschrift:
27.04.88

(21) Anmeldenummer: 85108017.6

(22) Anmeldetag: 28.06.85

(51) Int. Cl.⁴: **B 60 N 1/00**

(54) **Haltevorrichtung für Fahrgastsitzteile.**

(43) Veröffentlichungstag der Anmeldung:
30.12.86 Patentblatt 86/52

(45) Bekanntmachung des Hinweises auf die Patenterteilung:
27.04.88 Patentblatt 88/17

(84) Benannte Vertragsstaaten:
AT BE CH DE FR GB IT LI NL SE

(56) Entgegenhaltungen:
AT-B-233 424
DE-A-2 236 742
DE-A-2 630 333
GB-A-884 123
GB-A-1 036 424
US-A-1 740 431
US-A-2 943 373
US-A-3 873 155

(73) Patentinhaber: Ignaz Vogel GmbH & Co KG,
Fahrzeugsitze, Kleinsteinbacher Strasse 42- 44,
D-7500 Karlsruhe 41- Stu (DE)

(72) Erfinder: Vogel, Ignaz, Kleinsteinbacher Strasse 44,
D-7500 Karlsruhe 41- Stu (DE)

(74) Vertreter: Trappenberg, Hans, Wendtstrasse 1,
D-7500 Karlsruhe 21 (DE)

## Beschreibung

Die Erfindung betrifft eine Haltevorrichtung für die gepolsterte Sitz- oder Rückenplatte eines Fahrgastsitzes, bei dem diese üblicherweise aus Holz bestehenden Platten abnehmbar an einem Sitz-Untergestell oder einem Rückenlehnen-Gestell anzubringen sind, bestehend aus einer aus elastisch nachgiebigem Kunststoff gefertigten, in die Platte einzufügende, eine doppelkonische zentrale Öffnung aufweisende Hülse und einen, in die Hülse einschiebbaren, am Gestell zu befestigenden, doppelkonisch ausgeführten, sich zum freien Ende hin verjüngenden Haltebolzen.

Als Haltevorrichtung für derartige Sitz- oder Rückenplatten werden bisher nur Schraubverbindungen eingesetzt, wobei in die Platten Einschlagmuttern eingefügt werden, in die sodann durch Bohrungen in den Gestellteilen Schrauben eingedreht werden können. Dadurch sind diese Platten zwar auch lösbar am Gestell befestigt, jedoch werden zum Lösen, wie auch zum Montieren, stets Werkzeuge benötigt. Der besondere Nachteil dieser Schraubbefestigungen ist jedoch darin zu erblicken, daß sie sich beim Gebrauch durch die stetigen Erschütterungen des Fahrzeuges, in dem diese Fahrgastsitze montiert sind, lösen können oder doch zumindest so locker werden, daß Klappergeräusche zwischen den Platten und dem zugehörigen Gestell festzustellen sind. Diese Klappergeräusche stören außerordentlich, gerade in den heutigen modernen Omnibussen, deren Passagierraum gegen von außen kommende Geräusche sehr gut abgeschirmt ist.

Eine wesentliche Verbesserung gegenüber derartigen Schraubverbindungen stellt die Haltevorrichtung dar, wie sie oben beschrieben ist, da sowohl zur Montage wie auch zur Demontage der Sitzteile kein Werkzeug benötigt wird und die Verbindung außerdem sicher und klapperfrei ist. Diese, durch die GB-A-1 036 424 bekanntgewordene Haltevorrichtung, hat jedoch den Nachteil, daß sie schwierig an der Platte beziehungsweise am Gestell zu befestigen beziehungsweise zu lösen ist. Bei dieser bekannten Vorrichtung muß der Haltebolzen in der Platte zu einer größeren Öffnung hin verschoben werden, wodurch er dann aus der Platte herausgenommen werden kann. Abgesehen von der schwierigen Handhabung dieser Haltevorrichtung ist sie auch nicht, wie dies unbedingt bei Omnibussen gefordert werden muß, klapperfrei.

Aufgabe der Erfindung ist es, eine derartige Haltevorrichtung anzugeben, die das Aufsetzen und Abnehmen der gepolsterten Sitz- beziehungsweise Rückenplatten ohne Werkzeug und ohne größere Manipulationen zuläßt, wobei außerdem diese Teile selbst auch klapperfrei ohne Schwierigkeiten an der Platte wie auch am Gestell zu befestigen sind.

Erreicht wird dies nach der Erfindung dadurch, daß der elastisch nachgiebige Kunststoff ein Polyamid oder ein modifiziertes Polyamid ist, daß die Hülse bis auf einen unteren Bund längsgeschlitzt ist und einen oberen Abschlußbund aufweist, dessen Durchmesser mit dem Lochdurchmesser in der Platte übereinstimmt und daß oberhalb des Abschlußbundes ein überstehender Kragen vorgesehen ist.

Bei der Haltevorrichtung nach der Erfindung können die Sitzteile mit ihren Platten und in diesen Platten eingesetzten Hülsen auf die am Gestell angebrachten Haltebolzen einfach aufgedrückt werden, worauf die Sitzteile sicher gehalten sind. Die Demontage dieser Sitzteile geht ebenso einfach, lediglich durch Abziehen der Sitzteile beziehungsweise der Hülsen von diesen Haltebolzen. Gleichwohl ist diese Verbindung so sicher, daß sie auf jeden Fall über die Standzeit des Fahrgastsitzes nicht nur die Platten an Ort und Stelle, sondern auch klapperfrei hält. Dies wird dadurch erreicht, daß der doppelkonisch ausgeführte Haltebolzen in der entsprechend geformten Hülse unter Druck gehalten wird, den der elastisch nachgiebige Kunststoff infolge seiner Form auf diesen Bolzen ausübt. Damit werden nicht nur die Wartungszeiten entsprechend verkürzt und verbilligt, sondern es ist auch Sorge dafür getragen, daß stets eine sichere Befestigung dieser Sitzteile besteht.

Die erfindungsgemäß ausgeführte Haltevorrichtung hält jedoch nicht nur die zugehörigen Teile zusammen. Die Längsschlitze in der Hülse erlauben nämlich nicht nur ein Ausweichen der dadurch gebildeten einzelnen Klauen dieser Hülse, sondern lassen auch ein Zusammendrücken der Hülse zu, um sie in eine Bohrung der Platte einführen zu können. Dadurch werden keine weiteren Verbindungsmittel zwischen der Hülse und der Platte benötigt, da die einfach in eine entsprechende Bohrung in der Platte eingedrückte Hülse sich dort durch ihre eigene Elastizität hält.

Um das Aufdrücken der Hülse auf den Haltebolzen beziehungsweise das Abziehen dieser Hülse zu ermöglichen beziehungsweise um im montierten Zustand einen sicheren Halt dieser Teile zueinander zu erreichen, empfiehlt es sich, daß die Winkel des Doppelkonus' zur Achse zwischen 10° und 20°, vorzugsweise bei etwa 15° liegen.

Auf der Zeichnung ist ein Ausführungsbeispiel der erfindungsgemäßen Haltevorrichtung schematisch dargestellt, und zwar zeigen:

Fig. 1 einen Haltebolzen und
Fig. 2 eine in eine Holzplatte eingefügte Hülse.

Ein Haltebolzen 1 weist einen Gewindebolzen 2 auf, mit dem dieser Haltebolzen 1 am Untergestell beziehungsweise dem Rückenlehnen-Gestell (nicht eingezeichnet) angeschraubt werden kann. Vorderseitig weist der Haltebolzen 1 einen Doppelkonus 3 mit den beiden einstückig zusammengefaßten Konusteilen 3a, 3b auf.

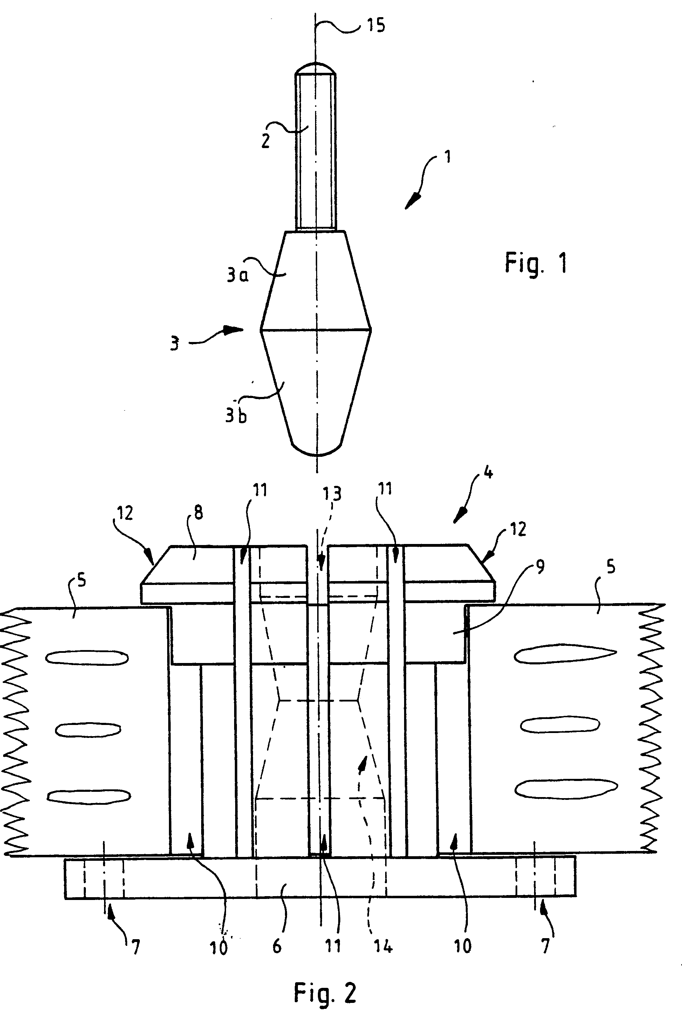

In Fig. 2 ist eine Hülse 4 dargestellt, eingefügt in eine Platte 5, die im dargestellten Fall aus Holz gebildet ist. Selbstverständlich kann diese Platte auch aus anderem Material gefertigt sein, insbesondere kann sie eine Kunststoff-Sandwich-Konstruktion sein. Die Hülse 4 weist einen unterseitigen Flansch 6 auf mit Befestigungsbohrungen 7. Oberseitig besitzt die Hülse 4 einen überstehenden Kragen 8, über einem Bund 9. Der Durchmesser des Bundes 9 stimmt mit dem Durchmesser der Bohrung 10 überein, liegt also an der Innenseite dieser Bohrung 10 an. Der Kragen 8 hingegen steht über diese Bohrung 10 über, so daß die Hülse 4 sicher in der Platte 5 verankert ist. Das Eindrücken der Hülse 4 in die Bohrung 10 in der Platte 5 wird erreicht durch Längsschlitze 11, durch die die Hülse 4 so zusammengedrückt werden kann, daß der überstehende Kragen auf den Durchmesser dieser Bohrung 10 zusammengedrückt werden kann. Das Eindrücken der Hülse 4 wird erleichtert durch eine Abschrägung 12 der Kante des überstehenden Kragens 8.

Bei der Herstellung der Sitz- beziehungsweise Rückenplatten werden in die Bohrungen der Platte die Hülsen 4 eingedrückt. In Sonderfällen kann die Hülse durch die Befestigungsbohrungen 7 hindurch auch an der Platte angeschraubt werden, jedoch genügt im allgemeinen die Schnappverbindung durch den überstehenden Kragen 8 der Hülse 4. Sodann werden die Haltebolzen 1 am Untergestell beziehungsweise am Rückenlehnen-Gestell befestigt.

Nunmehr kann die Rückenplatte auf das Gestell aufgesetzt werden, wobei der Haltebolzen 1 in die doppelkonische Öffnung 13 der Hülse 4 eindringt, und sich an der unteren konischen Fläche 14 der Hülse 4 festlegt. Da diese Festlegung stets unter Spannung des elastisch nachgiebigen Kunststoffes erfolgt, ist ein Klappern dieser Verbindung mit Sicherheit vermieden. Trotzdem hält die Haltevorrichtung nach der Erfindung die beiden Teile sicher aneinander, so daß ein derart aufgebauter Fahrgastsitz auch betriebssicher ist.

## Patentansprüche

1. Haltevorrichtung für die gepolsterte Sitz- oder Rückenplatte eines Fahrgastsitzes, bei dem diese üblicherweise aus Holz bestehenden Platten (5) abnehmbar an einem Sitz-Untergestell oder einem Rückenlehnen-Gestell anzubringen sind, bestehend aus einer aus elastisch nachgiebigem Kunststoff gefertigten, in die Platte (5) einzufügende, eine doppelkonische zentrale Öffnung (13) aufweisende Hülse (4) und einen, in die Hülse (4) einschiebbaren, am Gestell zu befestigenden, doppelkonisch (3) ausgeführten, sich zum freien Ende hin verjüngenden Haltebolzen (1),
dadurch gekennzeichnet,
daß der elastisch nachgiebige Kunststoff ein Polyamid oder ein modifiziertes Polyamid ist, daß die Hülse (4) bis auf einen unteren Bund längsgeschlitzt (11) ist und einen oberen Abschlußbund (9) aufweist, dessen Durchmesser mit dem Lochdurchmesser (10) in der Platte (5) übereinstimmt und daß oberhalb des Abschlußbundes (9) ein überstehender Kragen (8) vorgesehen ist.

2. Haltevorrichtung nach Anspruch 1,
dadurch gekennzeichnet,
daß die ringförmige Außenfläche des Kragens (8) zumindest teilweise nach innen verlaufend abgeschrägt (12) ist.

3. Haltevorrichtung nach Anspruch 1,
dadurch gekennzeichnet,
daß der untere Bund der Hülse (4) ein mit Bohrungen (7) für Befestigungsschrauben versehener Flansch (6) ist.

4. Haltevorrichtung nach einem oder mehreren der vorhergehenden Ansprüche,
dadurch gekennzeichnet,
daß die Winkel des Doppelkonusses (3, 13) zur Achse (15) zwischen 10° und 20°, vorzugsweise bei etwa 15° liegen.

## Claims

1. A holder for the upholstered seat or backrest plate of a passenger seat in which said plates (5), which are normally made of wood, are removably attachable to a seat understructure or back-rest structure, the holder being formed by a sleeve (4), which is made of elastically yielding plastics, is insertable in the plate (5), and has a double-conical central opening (13), and by a retaining bolt (1), which is insertable into the sleeve (4), is attachable to the structure, is double-conical (3) and tapers towards its free end, characterized in that the elastically yieldable plastics is a polyamide or a modified polyamide, that the sleeve (4) is provided with longitudinal slits (11) extending up to a lower shoulder, and has an upper end shoulder (9) the diameter of which corresponds to that of the hole (10) in the plate (5), and that above the end shoulder (9) is provided an overhanging collar (8).

2. A holder according to Claim 1, characterized in that the ring-shaped outer surface of the collar (8) ia at least partly tapered (12) inwardly.

3. A holder according to Claim 1, characterized in that the lower shoulder of the sleeve (4) is a flange (6) provided with holes (7) for fixing screws.

4. A holder according to one or more of the preceding claims, characterized in that the angle of the double cone (3, 13) relative to the axis (15) is between 10° and 20°, preferably about 15°.

**Revendications**

1. Dispositif de retenue pour la plaque rembourrée de siège ou de dossier d'un siège de passager, dans lequel ces plaques (5), généralement réalisées en bois, sont destinées à être montées de manière amovible sur un bâti de siège ou de dossier, ce dispositif consistant en une douille (4) qui est réalisée en une matière plastique élastiquement déformable, qui est destinée à être insérée dans la plaque (5) et qui présente un trou central (13) en double cône, et en un goujon de retenue (1) qui est destiné à être introduit dans la douille (4) et à être fixé sur le bâti, qui est réalisé sous la forme d'un cône double (3), et qui se rétrécit vers son extrémité libre, caractérisé par le fait que la matière plastique élastiquement déformable est un polyamide ou un polyamide modifié, que la douille (4) est fendue en longueur (11) jusqu'à un collet inférieur et présente un anneau de fermeture supérieur (9) dont le diamètre coïncide avec le diamètre du trou (10) de la plaque (5), et qu'un collet en saillie (8) est prévu au-dessus de l'anneau de fermeture (9).

2. Dispositif de retenue selon la revendication 1, caractérisé par le fait que la surface extérieure annulaire du collet (8) présente, au moins partiellement, un chanfrein (12) s'étendant vers l'intérieur.

3. Dispositif de retenue selon la revendication 1, caractérisé par le fait que le collet inférieur de la douille (4) est constitué par une bride (6) munie de trous (7) pour des vis de fixation.

4. Dispositif de retenue selon l'une quelconque des revendications précédentes, caractérisé par le fait que l'angle du cône double (3, 13) par rapport à l'axe (15) est compris entre 10° et 20°, et de préférence égal à 15° environ.

Fig. 1

Fig. 2